# EUROPÄISCHE PATENTSCHRIFT

(11) **EP 4 303 089 B1**
(45) Veröffentlichungstag und Bekanntmachung des Hinweises auf die Patenterteilung: **26.02.2025**
(21) Anmeldenummer: 23181369.2
(22) Anmeldetag: 26.06.2023
(51) Int. Cl.: B60W 30/16, B60W 50/10, B60K 31/00

(54) **VERFAHREN UND STEUERGERÄT ZUM BETREIBEN EINES KRAFTRADS MIT EINEM ABSTANDSREGELTEMPOMAT**
METHOD AND CONTROL DEVICE FOR OPERATING A MOTORCYCLE WITH A DISTANCE CONTROL TEMPLATE
PROCÉDÉ ET APPAREIL DE COMMANDE POUR FAIRE FONCTIONNER UNE MOTOCYCLETTE AVEC UN SYSTÈME DE RÉGULATION DE DISTANCE

(30) Priorität: 06.07.2022 DE 102022206921
(43) Veröffentlichungstag der Anmeldung: 10.01.2024
(73) Patentinhaber: Robert Bosch GmbH, 70442 Stuttgart (DE)
(72) Erfinder: Moldovan, Adrian-Alexandru, 400584 Cluj-Napoca (RO)

(56) Entgegenhaltungen:
- EP-A1- 3 335 955
- US-A1- 2019 248 367
- US-A1- 2021 188 270
- US-A1- 2022 135 165

## Beschreibung

### Gebiet der Erfindung

Die Erfindung betrifft ein Verfahren zum Betreiben eines Kraftrads mit einem Abstandsregeltempomat, ein entsprechendes Steuergerät sowie ein entsprechendes Computerprogrammprodukt.

### Stand der Technik

Ein Abstandsregeltempomat kann eine Geschwindigkeit eines Fahrzeugs in Abhängigkeit von einer Geschwindigkeit des Fahrzeugs und von einem Abstand zu einem vorausfahrenden Zielfahrzeug regeln. Wenn das Zielfahrzeug bis auf eine voreingestellte Zielgeschwindigkeit beschleunigt, wird die Geschwindigkeit bis zu der Zielgeschwindigkeit erhöht und dabei der Abstand entsprechend der steigenden Geschwindigkeit vergrößert. Wenn das Zielfahrzeug weiter beschleunigt, wird die Zielgeschwindigkeit gehalten und der Abstand steigt weiter an. Wenn das Fahrzeug an ein Zielfahrzeug heranfährt, wird die Geschwindigkeit so weit reduziert, dass das Fahrzeug in einem für die Geschwindigkeit angemessenen Abstand mit einer Geschwindigkeit des Zielfahrzeugs hinter dem Zielfahrzeug herfährt.

Der Abstandsregeltempomat bestimmt den Abstand zum Zielfahrzeug beispielsweise unter Verwendung eines Radarsensors des Fahrzeugs.

Auch bei einem Kraftrad kann ein Abstandsregeltempomat verbaut werden, wenn das Kraftrad einen Sensor zum Erfassen des Abstands aufweist.

### Offenbarung der Erfindung

Vor diesem Hintergrund werden mit dem hier vorgestellten Ansatz ein Verfahren zum Betreiben eines Kraftrads mit einem Abstandsregeltempomat, ein entsprechendes Steuergerät, sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ein herkömmlicher Abstandsregeltempomat weist einen Folgebereich auf, in dem ein vorausfahrendes Fahrzeug angeordnet sein muss, damit es als Zielobjekt erkannt wird. Der Folgebereich entspricht im Wesentlichen einem Kreissektor, an dessen Spitze ein Abstandssensor des Fahrzeugs angeordnet ist. Wenn das vorausfahrende Fahrzeug zu weit seitlich versetzt zum Fahrzeug fährt, kann es sich außerhalb des Folgebereichs befinden und wird dort nicht als Zielobjekt erkannt. Der Abstandsregeltempomat schaltet sich dann auf ein weiter vorausfahrendes Fahrzeug als Zielobjekt auf und versucht einen Abstand zu diesem Zielobjekt zu regeln. Dabei kann der Abstand zu dem seitlich versetzt fahrenden Fahrzeug stark verringert werden. Wenn kein weiter vorausfahrendes Fahrzeug erfasst wird, regelt der Abstandsregeltempomat die Geschwindigkeit auf eine voreingestellte Zielgeschwindigkeit. Auch dabei kann der Abstand zu dem seitlich versetzt fahrenden Fahrzeug stark verringert werden.

Wenn Krafträder in einer Gruppe fahren, können sie eine Formation bilden und in zwei seitlich versetzten Reihen fahren. Ein vorausfahrendes Kraftrad fährt dabei in einem Längsabstand und einem Querabstand rechts oder links versetzt vor dem eigenen Kraftrad. Das seitlich versetzt vorausfahrende Kraftrad ist das relevante Zielobjekt für den Abstandsregeltempomat, ist aber Teil der anderen Reihe. Der Längsabstand zu dem relevanten Zielobjekt ist geschwindigkeitsabhängig, kann aber kleiner als ein geschwindigkeitsabhängiger Mindestabstand zu einem direkt vorausfahrenden Zielobjekt sein. Der Querabstand ist abhängig von einer Breite einer von der Gruppe befahrenen Fahrspur. Bei einer breiten Fahrspur ist der Querabstand größer als bei einer schmalen Fahrspur. Durch den Querabstand kann das seitlich versetzt vorausfahrende Kraftrad außerhalb des herkömmlichen Folgebereichs fahren und so nicht als das relevante Zielobjekt erkannt werden. Stattdessen kann dann ein weiter vorausfahrendes Kraftrad aus der eigenen Reihe als Zielobjekt erfasst werden.

Der herkömmliche Folgebereich kann durch einen Gruppenbereich erweitert werden. Der Gruppenbereich erstreckt sich insbesondere seitlich über den herkömmlichen Folgebereich hinaus. Das in der anderen Reihe seitlich versetzt vorausfahrende Kraftrad fährt somit auch bei größeren Querabständen innerhalb des Gruppenbereichs und kann als das relevante Zielobjekt erkannt und gehalten werden. Ein in der eigenen Reihe vorausfahrendes Kraftrad kann als ergänzendes Zielobjekt verwendet werden. Zu diesem ergänzenden Zielobjekt kann dann beispielsweise der geschwindigkeitsabhängige Mindestabstand gehalten werden.

Bei dem hier vorgestellten Ansatz werden seitliche Begrenzungen des Gruppenbereichs an eine Breite einer benutzten Fahrspur angepasst. Die Breite der Fahrspur wird durch den Fahrer des Kraftrads eingegeben und zum Anpassen des Gruppenbereichs verwendet.

Durch den hier vorgestellten Ansatz kann ein seitlich versetzt vorausfahrendes Kraftrad bei unterschiedlichen Fahrspurbreiten sicher als das relevante Zielobjekt erkannt werden. Ferner werden falsche Erkennungen von Zielobjekten beispielsweise auf einer benachbarten Fahrspur verhindert oder zumindest verringert.

Es wird ein Verfahren zum Betreiben eines Kraftrads mit einem Abstandsregeltempomat vorgeschlagen, wobei eine seitliche Begrenzung eines Gruppenbereichs des Abstandsregeltempomats unter Verwendung einer Fahrspurbreiteninformation eingestellt wird, wobei die Fahrspurbreiteninformation von einer Mensch-Maschine-Schnittstelle des Kraftrads eingelesen wird, wobei ein Gruppenmodus des Abstandsregeltempomats aktivierbar ist, wenn ein Zielobjekt innerhalb des Gruppenbereichs erkannt wird.

Ideen zu Ausführungsformen der vorliegenden Erfindung können unter anderem als auf den nachfolgend beschriebenen Gedanken und Erkenntnissen beruhend angesehen werden.

Ein Kraftrad kann ein angetriebenes Zweirad sein. Das Kraftrad kann beispielsweise ein Motorrad, Mokick oder ein Motorroller sein. Das Kraftrad kann einen elektrischen Antrieb oder einen Verbrennungsmotor aufweisen. Das Kraftrad kann einen Abstandssensor aufweisen. Der Abstandssensor kann beispielsweise ein Radarsensor sein. Der Abstandssensor kann nach vorne gerichtet verbaut sein und einen Erfassungsbereich vor und seitlich vor dem Kraftrad aufweisen. Der Abstandssensor kann Abstände zu erfassten Objekten innerhalb des Erfassungsbereichs in Abstandsinformationen abbilden. Der Erfassungsbereich kann auch benachbarte Fahrspuren zumindest anteilig umfassen. Winkel zu den erfassten Objekten kann der Abstandssensor in Winkelinformationen abbilden. Die Winkelinformationen können beispielsweise auf eine Längsachse des Kraftrads bezogen sein. Der Abstandssensor kann die Objekte verfolgen und Verläufe von Abstandsinformationen und Winkelinformationen zu verfolgten Objekten bereitstellen.

Ein Abstandsregeltempomat kann die Abstandsinformationen und Winkelinformationen einlesen und auswerten. Der Abstandsregeltempomat kann weiterhin eine die momentane Geschwindigkeit des Kraftrads repräsentierende Geschwindigkeitsinformation einlesen. Der Abstandsregeltempomat kann den Antrieb und ein Bremssystem des Kraftrads ansteuern, um die Geschwindigkeit des Kraftrads zu beeinflussen. Der Abstandsregeltempomat kann einen Abstand zu einem Zielobjekt in Abhängigkeit von der Geschwindigkeit regeln. Zielobjekte können in einem Folgebereich des Abstandsregeltempomats und/oder in einem Gruppenbereich des Abstandsregeltempomats angeordnet sein. Objekte außerhalb des Gruppenbereichs und des Folgebereichs können ignoriert werden. Ein Zielobjekt kann beispielsweise mit einer ähnlichen Geschwindigkeit wie das Kraftrad vor dem Kraftrad im Folgebereich fahren. Ebenso kann das Zielobjekt mit ähnlicher Geschwindigkeit seitlich versetzt vor dem Kraftrad im Gruppenbereich fahren. Die Geschwindigkeit kann verringert werden, um den Abstand zu vergrößern, wenn das Zielobjekt langsamer wird. Umgekehrt kann die Geschwindigkeit erhöht werden, um den Abstand zu verringern, wenn das Zielobjekt schneller wird. Die Geschwindigkeit kann dabei bis zu einer vorgewählten Zielgeschwindigkeit erhöht werden.

Der Abstand zum Zielobjekt kann als Zeitlücke definiert sein. Die Zeitlücke kann eine Zeitdauer sein, die vergeht, bis zwei hintereinanderfahrende Fahrzeuge denselben Punkt auf der Straße passieren. Durch eine Vorgabe des Abstands über die Zeitlücke ist der Abstand immer geschwindigkeitsabhängig. Der Fahrer kann eine Größe der Zeitlücke anpassen, um dichter oder weniger dicht auf das Zielobjekt aufzufahren.

Der Gruppenbereich und der Folgebereich können Teilbereiche des Erfassungsbereichs des Abstandssensors sein. Der Erfassungsbereich kann größer als der Gruppenbereich sein. Der Folgebereich kann mittig zwischen zwei Teilbereichen des Gruppenbereichs angeordnet sein.

Wenn ein Zielobjekt im Folgebereich erkannt wird, kann der Abstandsregeltempomat den Abstand zum Zielobjekt über eine herkömmliche Zeitlücke beziehungsweise herkömmlich geschwindigkeitsabhängig regeln. Wenn ein Zielobjekt im Gruppenbereich erkannt wird, kann ein Gruppenmodus des Abstandsregeltempomats aktiviert werden. Im Gruppenmodus kann eine Zeitlücke zu dem im Gruppenbereich fahrenden Zielobjekt gegenüber der herkömmlichen Zeitlücke zu einem im Folgebereich erkannten Zielobjekt reduziert werden. Dadurch kann das Kraftrad seitlich versetzt zu dem im Gruppenbereich fahrenden Zielobjekt dichter auffahren als zu dem vor dem Kraftrad im Folgebereich fahrenden Zielobjekt.

Die in einer Gruppe fahrenden Krafträder nutzen eine Breite ihrer Fahrspur aus und passen einen Abstand zwischen den zwei Reihen an die Breite der Fahrspur an. Bei dem hier vorgestellten Ansatz kann eine Breite des Gruppenbereichs kann an die Breite der genutzten Fahrspur angepasst werden. So passt sich die Breite des Gruppenbereichs an den seitlichen Abstand zwischen den Reihen der Gruppe an. Die Breite der Fahrspur kann in einer Fahrspurbreiteninformation abgebildet sein.

Ein Fahrer des Kraftrads kann die Breite der Fahrspur abschätzen und als die Fahrspurbreiteninformation über eine Mensch-Maschine-Schnittstelle des Kraftrads eingeben. Die Mensch-Maschine-Schnittstelle kann beispielsweise ein Multifunktionsdisplay des Kraftrads sein. Die Mensch-Maschine-Schnittstelle kann aber auch zumindest einen Schalter beziehungsweise Drehregler an einem Lenker des Kraftrads aufweisen. Durch die Anpassung des Gruppenbereichs können Krafträder der Gruppe sicher erkannt werden und Fehlerkennungen auf benachbarten Fahrspuren können vermieden werden. Die Fahrspurbreiteninformation kann beispielsweise vor Beginn einer Ausfahrt eingelesen werden. Ebenso kann die Fahrspurbreiteninformation während der Fahrt eingelesen werden.

Eine Liste von möglichen Fahrspurbreiten kann auf der Mensch-Maschine-Schnittstelle bereitgestellt werden. Eine vom Fahrer ausgewählte Fahrspurbreite kann als die Fahrspurbreiteninformation eingelesen werden. Die Liste kann beispielsweise regional übliche Fahrspurbreiten enthalten. Die üblichen Fahrspurbreiten in verschiedenen Regionen der Welt können sich stark unterscheiden. Beispielsweise kann eine Region in einem Setup-Menü vorgewählt werden. Die Region kann auch über eine Position des Kraftrads eingestellt werden. Die Liste kann auch sortiert werden. Beispielsweise können die Einträge der Liste nach einer Auswahlhäufigkeit sortiert werden. Ebenso können die Einträge hierarchisch, aufsteigend oder absteigend sortiert werden.

Die eingelesene Fahrspurbreiteninformation kann in einem Speicher hinterlegt werden. Der Speicher kann bei einer Änderung der Fahrspurbreiteninformation überschrieben werden. Der Speicher kann insbesondere nicht flüchtig sein, so kann die Fahrspurbreiteninformation nach einem Neustart des Kraftrads aus dem Speicher ausgelesen und zum Einstellen der Begrenzungen des Gruppenbereichs verwendet werden.

Eine rechte Begrenzung und eine linke Begrenzung des Gruppenbereichs können symmetrisch zu einer Längsachse des Kraftrads eingestellt werden. Der Gruppenbereich kann rechts und links des Kraftrads gleich groß sein. Die Gruppenbereiche können rechts und links von dem Folgebereich gleich groß sein.

Eine Gruppeninformation kann auf der Mensch-Maschine-Schnittstelle bereitgestellt werden, wenn ein Zielobjekt innerhalb des Gruppenbereichs erkannt wird. Dann kann ein Gruppenmodus des Abstandsregeltempomats ansprechend auf eine über die Mensch-Maschine-Schnittstelle eingelesene Bestätigung aktiviert werden. Im Gruppenmodus kann ein geschwindigkeitsabhängiger Gruppenabstand zu dem Zielobjekt innerhalb des Gruppenbereichs eingeregelt werden. Eine Gruppeninformation kann ein Hinweis für den Fahrer sein, dass die Bedingungen zum Aktivieren des Gruppenmodus erfüllt sind. Der Fahrer kann daraufhin manuell das Aktivieren des Gruppenmodus bestätigen. Ein Gruppenabstand kann bei der gleichen Geschwindigkeit kleiner sein als ein Folgeabstand zu einem im Folgebereich vorausfahrenden Zielobjekt. Der Gruppenabstand kann schräg zur Längsachse des Kraftrads definiert sein. Der Gruppenabstand kann auch als Längskomponente und Querkomponente definiert sein. Wenn der Gruppenabstand eingeregelt wird, wird das Zielobjekt innerhalb des Gruppenbereich gehalten. Ein Folgeabstand kann im Gegensatz zum Gruppenabstand im Wesentlichen in der Längsrichtung des Kraftrads definiert sein, da der Folgebereich sich im Wesentlichen zentral, also im Bereich der Längsachse des Kraftrads vor dem Kraftrad erstreckt.

Alternativ oder ergänzend kann der Gruppenmodus automatisch aktiviert werden, wenn das Zielobjekt innerhalb des Gruppenbereichs erkannt wird. Dabei kann der Gruppenmodus beispielsweise automatisch aktiviert werden, wenn der Abstandsregeltempomat bereits aktiviert ist, und das Zielobjekt im Gruppenbereich erkannt wird. Ebenso kann aus dem Gruppenmodus in den Folgemodus des Abstandsregeltempomats gewechselt werden, wenn sich das Zielobjekt in den Folgebereich bewegt und/oder im Folgebereich erkannt wird. Im Folgemodus kann dann der geschwindigkeitsabhängige Folgeabstand zu dem Zielobjekt im Folgebereich eingeregelt werden. Durch die automatische Aktivierung des Gruppenmodus beziehungsweise Folgemodus kann der Abstandsregeltempomat automatisch zwischen dem Gruppenmodus und einem Folgemodus wechseln, wenn sich das Zielobjekt im Erfassungsbereich des Abstandssensors bewegt.

Das Verfahren ist vorzugsweise computerimplementiert und kann beispielsweise in Software oder Hardware oder in einer Mischform aus Software und Hardware beispielsweise in einem Steuergerät implementiert sein.

Der hier vorgestellte Ansatz schafft ferner ein Steuergerät, das dazu ausgebildet ist, um die Schritte einer Variante des hier vorgestellten Verfahrens in entsprechenden Einrichtungen durchzuführen, anzusteuern bzw. umzusetzen.

Das Steuergerät kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnung

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

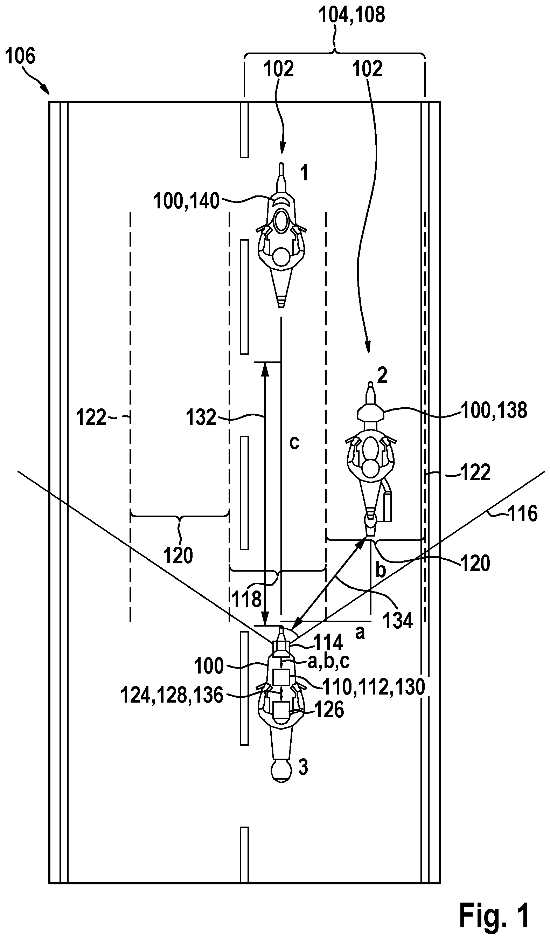

Fig. 1 zeigt eine Darstellung von Krafträdern in einer Gruppenformation.

Die Figur ist lediglich schematisch und nicht maßstabsgetreu. Gleiche Bezugszeichen bezeichnen gleiche oder gleichwirkende Merkmale.

### Ausführungsformen der Erfindung

Fig. 1 zeigt eine Darstellung von drei Krafträdern 100 in einer Gruppenformation. Die Gruppenformation besteht aus zwei seitlich versetzten Reihen 102 auf einer gemeinsamen Fahrspur 104 einer Straße 106. Die Krafträder 100 fahren in der Gruppenformation schräg versetzt zueinander, sodass sich die Krafträder 100 beider Reihen 102 in Längsrichtung abwechseln und näherungsweise die Eckpunkte eines Zickzackmusters bilden.

Die Reihen 102 nutzen eine Fahrspurbreite 108 der Fahrspur 104 aus. Daher ist ein Querabstand a zwischen den Reihen 102 abhängig von der Fahrspurbreite 108. Längsabstände b und c zum seitlich versetzt fahrenden Kraftrad 100 in der anderen Reihe 102 und zum in der gleichen Reihe 102 vorausfahrenden Kraftrad 100 sind im Wesentlichen von einer gefahrenen Geschwindigkeit abhängig.

Zumindest eines der Krafträder 100 weist einen Abstandsregeltempomat 110 und ein Steuergerät 112 gemäß dem hier vorgestellten Ansatz auf. Der Abstandsregeltempomat 110 liest den Querabstand a und die Längsabstände b und c von einem Abstandssensor 114 des Kraftrads 100 ein. Der Abstandssensor 114 ist beispielsweise ein Radarsensor. Der Abstandssensor 114 weist einen Erfassungsbereich 116 vor und seitlich vor dem Kraftrad 100 auf. Innerhalb des Erfassungsbereichs 116 sind für den Abstandsregeltempomat 110 zwei unterschiedliche Erkennungsbereiche definiert. Ein Folgebereich 118 erstreckt sich vor dem Kraftrad 100 symmetrisch zu einer Längsachse des Kraftrads 100. Zwei Gruppenbereiche 120 grenzen rechts und links an den Folgebereich 118 an.

Bei dem hier vorgestellten Ansatz stellt das Steuergerät 112 seitliche Begrenzungen 122 der Gruppenbereiche 120 unter Verwendung einer Fahrspurbreiteninformation 124 ein. Die Fahrspurbreiteninformation 124 repräsentiert die Fahrspurbreite 108. Die Fahrspurbreiteninformation 124 wird über eine Mensch-Maschine-Schnittstelle 126 des Kraftrads 100 eingelesen. Dazu gibt der Fahrer des Kraftrads 100 die Fahrspurbreiteninformation 124 über die Mensch-Maschine-Schnittstelle 126 ein.

In einem Ausführungsbeispiel wird eine Liste 128 möglicher Fahrspurbreiten 108 auf der Mensch-Maschine-Schnittstelle 126 ausgegeben und der Fahrer wählt die am besten passende Fahrspurbreite 108 als die Fahrspurbreiteninformation 124 aus.

Die Fahrspurbreiteninformation 124 wird dabei in einem nicht flüchtigen Speicher 130 abgespeichert, sodass die Fahrspurbreiteninformation 124 auch nach einer Unterbrechung der Stromzufuhr zu dem Speicher 130 ausgelesen werden kann. Wenn der Fahrer die Fahrspurbreiteninformation 124 ändert, wird der Speicher 130 neu beschrieben.

Das in der eigenen Reihe 102 vorausfahrende Kraftrad 100 befindet sich im Folgebereich 118. Das in der anderen Reihe 102 fahrende Kraftrad 100 befindet sich in einem der Gruppenbereiche 120. Der Längsabstand c zu dem im Folgebereich 118 fahrenden Kraftrad 100 ist größer als ein geschwindigkeitsabhängiger Folgeabstand 132 des Abstandsregeltempomats 110. Ein kombinierter Abstand aus dem Querabstand a und dem Längsabstand b zu dem im Gruppenbereich 120 fahrenden Kraftrad 100 ist im Bereich eines geschwindigkeitsabhängigen Gruppenabstands 134 des Abstandsregeltempomats 110. Über die Mensch-Maschine-Schnittstelle 126 wird dem Fahrer eine Gruppeninformation 136 bereitgestellt. Die Gruppeninformation 136 würde auch bereitgestellt, wenn nur das im Gruppenbereich 120 fahrende Kraftrad erkannt wird.

Wenn der Fahrer die Gruppeninformation 136 über die Mensch-Maschine-Schnittstelle 126 bestätigt, wird ein Gruppenmodus des Abstandsregeltempomats 110 aktiviert und das im Gruppenbereich 120 fahrende Kraftrad 100 wird als primäres Zielobjekt 138 verwendet. Der Abstandsregeltempomat 110 regelt über eine Geschwindigkeit des Kraftrads 100 den Gruppenabstand 134 zu dem primären Zielobjekt 138 ein.

Das in der eigenen Reihe 102 vorausfahrende Kraftrad 100 ist weiter entfernt als das primäre Zielobjekt 138. Der Abstandsregeltempomat 110 verwendet das im Folgebereich 118 fahrende Kraftrad 100 als sekundäres Zielobjekt 140, während er im Gruppenmodus ist. Erst wenn der Längsabstand c in den Bereich des Folgeabstands 132 kommt, wechselt der Abstandsregeltempomat 110 in einen Folgemodus und verwendet das im Folgebereich 118 fahrende Kraftrad 100 als das primäre Zielobjekt. Dann regelt der Abstandsregeltempomat 110 über die Geschwindigkeit des Kraftrads 100 den Längsabstand c auf den Folgeabstand 132 ein.

Der Wechsel erfolgt dabei fließend. Wenn beispielsweise das als primäre Zielobjekt 138 verwendete, in der andere Reihe 102 fahrende Kraftrad 100 zu weit in Richtung einer Mitte der Fahrspur 104 driftet, verlässt es den Gruppenbereich 120 und dringt in den Folgebereich 118 ein, fährt aber weiter im Gruppenabstand 134 vor dem Kraftrad 100. Der Gruppenabstand 134 ist kleiner als der Folgeabstand 132. Der Abstandsregeltempomat 110 wechselt automatisch in den Folgemodus und drosselt nun die Geschwindigkeit, bis der Folgeabstand 132 zum primären Zielobjekt 138 eingehalten wird. Wenn das primäre Zielobjekt 138 wieder zurück in den Gruppenbereich 120 driftet, wechselt der Abstandsregeltempomat 110 automatisch zurück in den Gruppenmodus und erhöht die Geschwindigkeit wieder, bis der Gruppenabstand 134 wieder eingehalten wird.

Falls zuvor der Längsabstand c zu dem im Folgebereich 118 fahrenden Kraftrad 100 in den Bereich des Folgeabstands 132 kommt, wechselt der Abstandsregeltempomat 110 wieder in den Folgemodus und verwendet das im Folgebereich 118 fahrende Kraftrad 100 als primäres Zielobjekt zum Einregeln des Folgeabstands 132.

Wenn dann der Längsabstand b zu dem im Gruppenbereich 120 fahrenden Kraftrad 100 wieder in den Bereich des Gruppenabstands 134 kommt. wechselt der Abstandsregeltempomat 110 zurück in den Gruppenmodus und verwendet das im Gruppenbereich 120 fahrende Kraftrad 100 als primäres Zielobjekt 138 zum Einregeln des Gruppenabstands 134.

Nachfolgend werden mögliche Ausgestaltungen der Erfindung nochmals zusammengefasst bzw. mit einer geringfügig anderen Wortwahl dargestellt.

Es wird eine Auswahl der Fahrspurbreite durch den Fahrer über eine Mensch-Maschine-Schnittstelle zur Erkennung einer Gruppenfahrsituation vorgestellt.

Bei einer Motorrad-Gruppenfahrt fahren die Motorräder einer Gruppe in einer Formation von zwei seitlich und in Längsrichtung versetzten Reihen, die ein "Zick-Zack"-Muster bilden. Es wird eine Gruppenfahrsituation mit mindestens einem Zielfahrzeug angenommen. Der Gruppenverband nimmt eine Fahrspur ein und der seitliche Abstand zwischen den beiden seitlich versetzten Reihen hängt ausschließlich von der Breite der Fahrspur ab. In Fig. 1 ist eine gültige Gruppenfahrsituation dargestellt, wobei der Abstand "a" der Abstand zwischen den beiden seitlich versetzten Reihen ist.

Die Motorräder weisen einen adaptiven Geschwindigkeitsregler auf, der auf Radar basiert. Der Geschwindigkeitsregler ist für Gruppenfahrten geeignet.

Um eine gültige Gruppenfahrsituation zu erkennen, benötigt das System Informationen über die Breite der Fahrspur. Diese Information kann von dem radargestützten System nicht genau berechnet werden. Es kann ein fester Wert für die Fahrspurbreite angenommen werden. Um eine Reihe von Märkten abzudecken, können im System voreingestellte Werte für die Fahrbahnbreite gespeichert werden. Wenn die angenommene Fahrspurbreite falsch ist, kann dies zu falsch positiven oder falsch negativen Erkennungen führen.

Hier wird die Fahrspurbreite vom Fahrer über die Mensch-Maschine-Schnittstelle angegeben. Durch die Verwendung präziser Werte für die Fahrspurbreite wird die Leistung des Algorithmus zur Erkennung von Gruppenfahrsituationen verbessert.

Der Fahrer wählt den Wert für die Fahrspurbreite auf der Mensch-Maschine-Schnittstelle aus, der dann von der Mensch-Maschine-Schnittstelle an den Radarsensor gesendet wird. Der Sensor speichert diesen Wert in einem nicht flüchtigen Speicherbereich, um ihn für die Erkennung von Gruppenfahrsituationen zu verwenden.

Der Radarsensor verwendet den Wert für die Fahrspurbreite, um einen Wertebereich für den seitlichen Abstand zwischen zwei aufeinander folgenden Motorrädern bei einer gültigen Gruppenfahrsituation zu berechnen.

Sobald der Wertebereich bestimmt ist, prüft das System kontinuierlich, ob das Ego-Motorrad und die vorausfahrenden Motorräder die seitlichen Abstandsanforderungen für eine gültige Gruppenfahrsituation erfüllen. Das System prüft, ob der Abstand "a" im Bereich der seitlichen Abstände liegt, die auf der Grundlage der vom Fahrer über die Mensch-Maschine-Schnittstelle eingegebenen Fahrbahnbreite berechnet wurden.

Die Information über die Fahrbahnbreite wird dem System über die Mensch-Maschine-Schnittstelle zur Verfügung gestellt, um die Leistung des Algorithmus zur Erkennung von Gruppenfahrsituationen zu verbessern.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Kraftrads (100) mit einem Abstandsregeltempomat (110), wobei eine seitliche Begrenzung (122) eines Gruppenbereichs (120) des Abstandsregeltempomats (110) unter Verwendung einer Fahrspurbreiteninformation (124) eingestellt wird, wobei die Fahrspurbreiteninformation (124) von einer Mensch-Maschine-Schnittstelle (126) des Kraftrads (100) eingelesen wird, wobei ein Gruppenmodus des Abstandsregeltempomats (110) aktivierbar ist, wenn ein Zielobjekt (138) innerhalb des Gruppenbereichs (120) erkannt wird.

2. Verfahren gemäß Anspruch 1, bei dem eine Liste (128) von möglichen Fahrspurbreiten (108) auf der Mensch-Maschine-Schnittstelle (126) bereitgestellt wird, wobei eine ausgewählte Fahrspurbreite (108) als die Fahrspurbreiteninformation (124) eingelesen wird.

3. Verfahren gemäß einem der vorhergehenden Ansprüche, bei dem die eingelesene Fahrspurbreiteninformation (124) in einem Speicher (130) hinterlegt wird, wobei der Speicher (130) bei einer Änderung der Fahrspurbreiteninformation (124) überschrieben wird.

4. Verfahren gemäß einem der vorhergehenden Ansprüche, bei dem eine rechte Begrenzung (122) und eine linke Begrenzung des Gruppenbereichs (122) symmetrisch zu einer Längsachse des Kraftrads (100) eingestellt werden.

5. Verfahren gemäß einem der vorhergehenden Ansprüche, bei dem eine Gruppeninformation (136) auf der Mensch-Maschine-Schnittstelle (126) bereitgestellt wird, wenn ein Zielobjekt (138) innerhalb des Gruppenbereichs (120) erkannt wird, wobei ein Gruppenmodus des Abstandsregeltempomats (1109 ansprechend auf eine über die Mensch-Maschine-Schnittstelle (126) eingelesene Bestätigung aktiviert wird, wobei im Gruppenmodus ein geschwindigkeitsabhängiger Gruppenabstand (134) zu dem Zielobjekt (138) innerhalb des Gruppenbereichs (120) eingeregelt wird.

6. Verfahren gemäß einem der Ansprüche 1 bis 4, bei dem ein Gruppenmodus des Abstandsregeltempomats (110) automatisch aktiviert wird, wenn ein Zielobjekt (138) innerhalb des Gruppenbereichs (120) erkannt wird, wobei im Gruppenmodus ein geschwindigkeitsabhängiger Gruppenabstand (134) zu dem Zielobjekt (138) innerhalb des Gruppenbereichs (120) eingeregelt wird.

7. Verfahren gemäß einem der Ansprüche 5 oder 6 und Anspruch 4, bei dem aus dem Gruppenmodus in einen Folgemodus des Abstandsregeltempomats (110) gewechselt wird, wenn sich das Zielobjekt (138) in einen Folgebereich (118) des Abstandsregeltempomats (110) bewegt und/oder ein Zielobjekt (138) im Folgebereich (118) erkannt wird, wobei im Folgemodus ein geschwindigkeitsabhängiger Folgeabstand (132) zu dem Zielobjekt (138) im Folgebereich (118) eingeregelt wird.

8. Steuergerät (112) zum Betreiben eines Kraftrads (100), wobei das Steuergerät (112) dazu ausgebildet ist, das Verfahren gemäß einem der vorhergehenden Ansprüche in entsprechenden Einrichtungen auszuführen, umzusetzen und/oder anzusteuern.

9. Computerprogrammprodukt, das dazu eingerichtet ist, einen Prozessor bei Ausführung des Computerprogrammprodukts dazu anzuleiten, das Verfahren gemäß einem der Ansprüche 1 bis 7 auszuführen, umzusetzen und/oder anzusteuern.

10. Maschinenlesbares Speichermedium, auf dem das Computerprogrammprodukt gemäß Anspruch 9 gespeichert ist.

## Claims

1. Method for operating a motorcycle (100) with an adaptive cruise control system (110), wherein a side boundary (122) of a group region (120) of the adaptive cruise control system (110) is set using lane width information (124), wherein the lane width information (124) is read from a human-machine interface (126) of the motorcycle (100), wherein a group mode of the adaptive cruise control system (110) can be activated when a target object (138) is identified within the group region (120).

2. Method according to Claim 1, in which a list (128) of possible lane widths (108) is provided on the human-machine interface (126), wherein a selected lane width (108) is read as the lane width information (124).

3. Method according to either of the preceding claims, in which the read lane width information (124) is stored in a memory (130), wherein the memory (130) is overwritten in the event of a change in the lane width information (124).

4. Method according to any of the preceding claims, in which a right-hand boundary (122) and a left-hand boundary of the group region (122) are set symmetrically to a longitudinal axis of the motorcycle (100).

5. Method according to any of the preceding claims, in which group information (136) is provided on the human-machine interface (126) when a target object (138) is identified within the group region (120), wherein a group mode of the adaptive cruise control system (110) is activated in response to a confirmation read via the human-machine interface (126), wherein a speed-dependent group distance (134) from the target object (138) within the group region (120) is adjusted in the group mode.

6. Method according to any of Claims 1 to 4, in which a group mode of the adaptive cruise control system (110) is automatically activated when a target object (138) is identified within the group region (120), wherein a speed-dependent group distance (134) from the target object (138) within the group region (120) is adjusted in the group mode.

7. Method according to any of Claims 5 or 6 and Claim 4, in which a changeover is made from the group mode to a follow mode of the adaptive cruise control system (110) when the target object (138) moves to a follow region (118) of the adaptive cruise control system (110) and/or a target object (138) is identified in the follow region (118), wherein a speed-dependent follow distance (132) from the target object (138) in the follow region (118) is adjusted in the follow mode.

8. Controller (112) for operating a motorcycle (100), wherein the controller (112) is designed to execute, implement and/or activate the method according to any of the preceding claims in corresponding devices.

9. Computer program product which is configured to instruct a processor to execute, implement and/or activate the method according to any of Claims 1 to 7 when executing the computer program product.

10. Machine-readable storage medium, on which the computer program product according to Claim 9 is stored.

## Revendications

1. Procédé pour faire fonctionner une motocyclette (100) avec un système (110) de régulation de distance, dans lequel une limitation latérale (122) d'une zone de groupe (120) du système (110) de régulation de distance est réglée en utilisant une information (124) de largeur de voie, l'information (124) de largeur de voie étant lue par une interface homme-machine (126) de la motocyclette (100), un mode groupe du système (110) de régulation de distance étant apte à être activé lorsqu'un objet cible (138) est détecté à l'intérieur de la zone de groupe (120).

2. Procédé selon la revendication 1, dans lequel une liste (128) de largeurs de voie (108) possibles est fournie sur l'interface homme-machine (126), une largeur de voie (108) sélectionnée étant lue comme étant l'information (124) de largeur de voie.

3. Procédé selon l'une des revendications précédentes, dans lequel l'information (124) de largeur de voie lue est stockée dans une mémoire (130), la mémoire (130) étant écrasée lors d'une modification de l'information (124) de largeur de voie.

4. Procédé selon l'une des revendications précédentes, dans lequel une limite droite (122) et une limite gauche de la zone de groupe (122) sont réglées symétriquement par rapport à un axe longitudinal de la motocyclette (100).

5. Procédé selon l'une des revendications précédentes, dans lequel une information de groupe (136) est fournie sur l'interface homme-machine (126) lorsqu'un objet cible (138) est détecté à l'intérieur de la zone de groupe (120), un mode de groupe du système (110) de régulation de distance étant activé en réponse à une confirmation lue via l'interface homme-machine (126), une distance de groupe (134) dépendant de la vitesse par rapport à l'objet cible (138) à l'intérieur de la zone de groupe (120) étant réglée dans le mode de groupe.

6. Procédé selon l'une des revendications 1 à 4, dans lequel un mode de groupe du système (110) de régulation de distance est activé automatiquement lorsqu'un objet cible (138) est détecté à l'intérieur de la zone de groupe (120), une distance de groupe (134) dépendant de la vitesse par rapport à l'objet cible (138) étant réglée à l'intérieur de la zone de groupe (120) dans le mode de groupe.

7. Procédé selon l'une des revendications 5 ou 6 et la revendication 4, dans lequel un passage du mode groupe à un mode de suivi du système (110) de régulation de distance est opéré lorsque l'objet cible (138) se déplace dans une zone de suivi (118) du système (110) de régulation de distance et/ou qu'un objet cible (138) est détecté dans la zone de suivi (118), une distance de suivi (132) dépendant de la vitesse étant régulée dans le mode de suivi par rapport à l'objet cible (138) dans la zone de suivi (118).

8. Appareil de commande (112) pour faire fonctionner une motocyclette (100), l'appareil de commande (112) étant conçu pour exécuter, mettre en œuvre et/ou commander le procédé selon l'une des revendications précédentes dans des dispositifs correspondants.

9. Produit de programme d'ordinateur adapté pour, lors de l'exécution du produit de programme d'ordinateur, guider un processeur pour exécuter, mettre en œuvre et/ou commander le procédé selon l'une des revendications 1 à 7.

10. Support de stockage lisible par machine sur lequel est mémorisé le produit programme d'ordinateur selon la revendication 9.
